# EUROPÄISCHE PATENTSCHRIFT

(11) **EP 2 438 006 B1**
(45) Veröffentlichungstag und Bekanntmachung des Hinweises auf die Patenterteilung: **14.01.2015**
(21) Anmeldenummer: 10732630.8
(22) Anmeldetag: 02.06.2010
(51) Int. Cl.: C01B 13/02, G01N 25/00, G01N 17/00

(54) **THERMOANALYSEVORRICHTUNG UND THERMOANALYSEVERFAHREN**
THERMAL ANALYSIS APPARATUS AND THERMAL ANALYSIS METHOD
DISPOSITIF D'ANALYSE THERMIQUE ET PROCÉDÉ D'ANALYSE THERMIQUE

(30) Priorität: 05.06.2009 DE 102009024055
(43) Veröffentlichungstag der Anmeldung: 11.04.2012
(73) Patentinhaber: Netzsch Gerätebau GmbH, 95100 Selb (DE)
(72) Erfinder: SCHINDLER, Alexander, 95191 Leupoldsgün (DE); BLUMM, Jürgen, 95100 Selb (DE)
(86) Internationale Anmeldenummer: PCT/DE2010/000623
(87) Internationale Veröffentlichungsnummer: WO 2010/139311

(56) Entgegenhaltungen:
- US-A- 5 061 914
- US-A- 5 536 302
- B. SRINIVASA RAO AND V. JAYARAM: "Pressureless infiltration of Al-Mg based alloys into Al2O3 preforms: mechanisms and phenomenology" ACTA MATERIALIA, Bd. 49, 2001, Seiten 2373-2385, XP002598488
- HEUER H ET AL: "Thin tantalum-silicon-oxygen/tantalum-silicon-n itrogen films as high-efficiency humidity diffusion barriers for solar cell encapsulation" THIN SOLID FILMS, ELSEVIER-SEQUOIA S.A. LAUSANNE, CH LNKD- DOI:10.1016/J.TSF.2006.05.033, Bd. 515, Nr. 4, 5. Dezember 2006 (2006-12-05), Seiten 1612-1617, XP025007485 ISSN: 0040-6090 [gefunden am 2006-12-05]

## Beschreibung

Die vorliegende Erfindung betrifft eine Thermoanalysevorrichtung nach dem Oberbegriff des Anspruchs 1 sowie ein Thermoanalyseverfahren nach dem Oberbegriff des Anspruchs 17.

Als thermische Analyse bezeichnet man Untersuchungsmethoden zur Materialcharakterisierung, wobei die Probe einem kontrollierten Temperaturprogramm unterzogen wird. Dabei werden beispielsweise Dimensionsänderungen, Massenänderungen, kalorische Effekte, die spezifische Wärmekapazität oder entweichende Gase untersucht.

Die Proben können durch Restsauerstoff in einer ansonsten in dem Probenraum vorgesehenen Inertgasatmosphäre oxidieren, was die Ergebnisse verfälscht und daher unerwünscht ist. Daher stellt das Vorhandensein von Restsauerstoff in dem Inertgas, das auch als Spülgas bezeichnet und/oder eingesetzt wird, in der Apparatur für Messungen unter nomineller Inertgas-Atmosphäre (z.B. Stickstoff, Argon oder Helium) ein Problem dar.

Restsauerstoff in einer Apparatur wird üblicherweise dadurch minimiert, dass die typischerweise vakuumdichte Apparatur evakuiert und anschließend mit Inertgas hoher Reinheit gefüllt und gespült wird. Somit hängt die Restsäuerstoffkonzentration von der Vakuumdichtheit der Apparatur, der Vakuumdichtheit der Gaszuleitungen und der Reinheit des vorhandenen Inertgases ab. Eine Reinigung des Spülgases vor dem Eintritt in die Apparatur ist nur unzureichend wegen der endlichen Leckrate der Apparatur selbst und der Desorption von Restsauerstoff von den Wänden der Apparatur.

Entsprechend sind Vorrichtungen und Verfahren zum Entfernen von Restsauerstoff aus einem Inertgas gemäß den Publikationen DE 2 340 102 A, DE 698 30 247 T2, DE 36 21 014 C2 und DE 689 10 638 T2 zwar geeignet, den Restsauerstoffgehalt eines Inertgases grundsätzlich zu verringern, jedoch wird die Reinheit des Inertgases hinsichtlich Restsauerstoff jeweils vor der Anwendung des Inertgases durch dessen weiteren Weg in jeweiligen Apparaturen wieder verschlechtert. Die ist unter Umständen bei bestimmten Produktionsprozessen und Produktionsumgebungen, wie sie bei den vorgenannten Publikationen beispielhaft als Anwendungen für das Inertgas herangezogen werden, hinzunehmen, aber für Mess- und Analyseeinrichtungen und -verfahren, wie insbesondere Thermoanalysevorrichtungen und - verfahren, werden damit keine befriedigenden Ergebnisse erzielt.

Daher ist es das Ziel der Erfindung, die Restsauerstoffbelastung bei Messungen mit Thermoanalysevorrichtungen und -verfahren zu verringern und damit zu verbessern.

Dieses Ziel wird mit einer Thermoanalysevorrichtung nach dem Anspruch 1, sowie Thermoanalyseverfahren nach dem Anspruch 17 erreicht.

Damit schafft die Erfindung eine Thermoanalysevorrichtung, mit einem Probenraum, in dem ein Probenträger und Heizeinrichtungen sowie ein Inertgas enthalten sind, wobei ferner Strömungseinrichtungen für das Inertgas zur Erzeugung einer Inertgasströmung zu dem Probenträger hin und Getter-Einrichtungen (Sauerstofffalleneinrichtung) zur Entfernung von Restsauerstoff aus dem Inertgas enthalten sind, welche Getter-Einrichtungen in der Inertgasströmung in Strömungsrichtung vor dem Probenträger in dessen Nähe angeordnet sind.

Durch die Getter-Einrichtungen wird in vorteilhafter und erfindungsgemäßer Weise eine weitergehende in situ Reduzierung der Restsauerstoffkonzentration in der Thermoanalysevorrichtung am Ort der Probe erreicht. Aus Acta mater. 49(2001), 2373-2385 ist weiterhin eine TGA-Einrichtung bekannt, worin Restsauerstoff aus dem zuströmenden Inertgas N₂ durch einen die Probe berührenden Getter entfernt wird.

Erfindungsgemäß ist weiter vorgesehen, dass die Getter-Einrichtungen in der Inertgasströmung in Strömungsrichtung vor dem Probenträger von ihm beabstandet angeordnet sind.

Es ist ferner bevorzugt, wenn die Strömungseinrichtungen für das Inertgas eine Inertgaszufuhr zu dem Probenraum enthalten.

Noch eine weitere vorzugsweise Ausgestaltung besteht darin, dass die Getter-Einrichtungen einen Getter-Träger und ein daran oder darauf angeordnetes, insbesondere metallisches Getter-Material enthalten, wobei insbesondere ferner vorgesehen sein kann, dass der Getter-Träger und/oder das Getter-Material in der Strömungsrichtung des Inertgases dem Probenträger vorgeschaltet und zumindest annähernd axial mit letzterem ausgerichtet angeordnet sind/ist. Alternativ oder zusätzlich kann mit Vorzug vorgesehen sein,
- dass das Getter-Material temperaturbeständig ist,
- dass das Getter-Material Zirkonium enthält,
- dass die Heizeinrichtungen ausgelegt, wie insbesondere ausgebildet, geformt und/oder angeordnet sind, das Getter-Material auf eine Temperatur von 400 °C oder mehr zu heizen,
- dass der Getter-Träger zumindest im wesentlichen aus einem keramischen Material besteht, wobei das keramische Material insbesondere Y₂O₃ enthält,
- dass der Getter-Träger zumindest im wesentlichen aus einem Material besteht, das nicht mit dem Getter-Material reagiert, und/oder
- dass der Getter-Träger ein Stab, ein Draht oder ein Ring ist.

Eine weitere bevorzugte Ausgestaltung besteht darin, dass die Heizeinrichtungen eine Heizzone bestimmen, in der der Probenträger samt einer ggf. darauf oder daran angeordneten Probe und zumindest teilweise die Getter-Einrichtungen, ggf. zumindest das Getter-Material, angeordnet sind.

Es kann ferner mit Vorzug vorgesehen sein, dass die Heizeinrichtungen derart ausgelegt und angeordnet sind, dass sie gleichzeitig eine auf dem Probenträger anordenbare Probe und zumindest teilweise die Getter-Einrichtungen, ggf. zumindest das Getter-Material, heizen.

Gemäß noch einer anderen bevorzugten Ausgestaltung ist vorgesehen, dass die Heizeinrichtungen zum Heizen einer auf dem Probenträger anordenbaren Probe wenigstens ein bezüglich einer Probe auf oder an dem Probenträger seitlich vom letzterem beabstandetes Heizelement enthalten, wobei insbesondere weiter vorgesehen sein kann, dass das Heizelement oder die Heizelemente den Probenträger seitlich zumindest teilweise umgibt bzw. umgeben.

Vorzugsweise sind die Strömungseinrichtungen ausgelegt und angeordnet, um eine zumindest im Wesentlichen vertikale Inertgasströmung zu erzeugen, und ist der Probenträger zumindest im wesentlichen oberhalb der Getter-Einrichtungen angeordnet, so dass die Inertgasströmung an dem Probenträger sowie an einer auf dem Probenträger anordenbaren Probe seitlich vorbei strömt. Alternativ kann auch vorgesehen sein, dass die Strömungseinrichtungen ausgelegt und angeordnet sind, um eine zumindest im wesentlichen horizontale Inertgasströmung zu erzeugen, und dass der Probenträger zumindest im wesentlichen seitlich der Getter-Einrichtungen angeordnet ist, so dass die Inertgasströmung zumindest über den Probenträger sowie eine auf dem Probenträger anordenbare Probe strömt.

Das Inertgas enthält bevorzugt Argon, insbesondere der Reinheit 99,996, Stickstoff und/oder Helium.

Weiterhin kann mit Vorzug vorgesehen sein, dass der Probenträger ausgelegt ist, einen Tiegel zur Aufnahme einer zu untersuchenden Probe zu tragen.

Erfindungsgemäß enthalten die Sauerstofffalleneinrichtungen Getter-Einrichtungen.

Weiterhin gelten mit Vorzug die vorher geschilderten Ausgestaltungen insbesondere der Getter-Einrichtungen, aber auch der Thermoanalysevorrichtung im übrigen.

Die Erfindung schafft schließlich auch ein Thermoanalyseverfahren, wobei in einem Probenraum ein Probenträger und Heizeinrichtungen von Inertgas umgeben sind, und wobei das Inertgas veranlasst wird, als Inertgasströmung in dem Probenraum zuerst über oder vorbei an Getter-Einrichtungen zur Entfernung von Restsauerstoff aus dem Inertgas und dann zu dem Probenträger zu strömen, der in der Nähe der Getter-Einrichtungen angeordnet ist.

Eine bevorzugte Weiterbildung davon besteht darin, dass die Inertgasströmung mit einer Inertgaszufuhr zu dem Probenraum erzeugt wird.

Es kann mit Vorzug ferner vorgesehen sein, dass die Heizeinrichtungen eine Heizzone bestimmen, in der der Probenträger samt einer ggf. darauf oder daran angeordneten Probe und zumindest teilweise die Getter-Einrichtungen, ggf. zumindest das Getter-Material, angeordnet sind, so dass die Heizeinrichtungen gleichzeitig eine auf dem Probenträger anordenbare Probe und zumindest teilweise die Getter-Einrichtungen oder ein in diesen enthaltenes Getter-Material heizen.

Eine andere vorzugsweise Ausgestaltung des Thermoanalyseverfahrens besteht darin, dass eine zumindest im wesentlichen vertikale Inertgasströmung erzeugt wird, die zuerst an den Getter-Einrichtungen vorbei und dann zu dem zumindest im wesentlichen darüber angeordneten Probenträger strömt, so dass die Inertgasströmung an dem Probenträger sowie an einer auf dem Probenträger anordenbaren Probe seitlich vorbei strömt. Alternativ kann vorgesehen sein, dass eine zumindest im wesentlichen horizontale Inertgasströmung erzeugt wird, die zuerst an den Getter-Einrichtungen vorbei und dann zu dem zumindest im wesentlichen seitlich davon angeordneten Probenträger strömt, so dass die Inertgasströmung zumindest über den Probenträger sowie eine auf dem Probenträger anordenbare Probe strömt. Weiterhin kann es vorgesehen sein, dass die Thermoanalysevorrichtung aus mehreren Heizeinrichtungen besteht, mit denen die Getter-Einrichtung und die Probe unabhängig voneinander beheizbar sind.

In einer zusätzlichen Ausgestaltungsform wird die Thermoanalysevorrichtung betrieben, ohne dass diese vorab evakuiert wird. Bei dieser Ausführungsform wird der Probenraum lediglich mit einer Inertgasströmung beaufschlagt, welche die Getter-Einrichtung und später die Probe umspült.

Weitere bevorzugte und/oder vorteilhafte Ausgestaltungen der Erfindung ergeben sich aus den Ansprüchen und deren Kombinationen sowie den gesamten vorliegenden Anmeldungsunterlagen.

Die Erfindung wird anhand von Ausführungsbeispielen nachfolgend unter Bezugnahme auf die Zeichnung lediglich exemplarisch näher erläutert, in der
- Fig. 1: in einer Schemadarstellung ein erstes Ausführungsbeispiel einer Thermoanalysevorrichtung zeigt,
- Fig. 2: in einer Schemadarstellung ein zweites Ausführungsbeispiel einer Thermoanalysevorrichtung zeigt, und
- Fig. 3: Messdiagramme zur Verdeutlichung der Auswirkung des Einsatzes einer erfindungsgemäßen Thermoanalysevorrichtung zeigt.

Gleiche Bezugszeichen in den einzelnen Figuren und Abbildungen der Zeichnung bezeichnen gleiche oder ähnliche oder gleich oder ähnlich wirkende Komponenten. Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

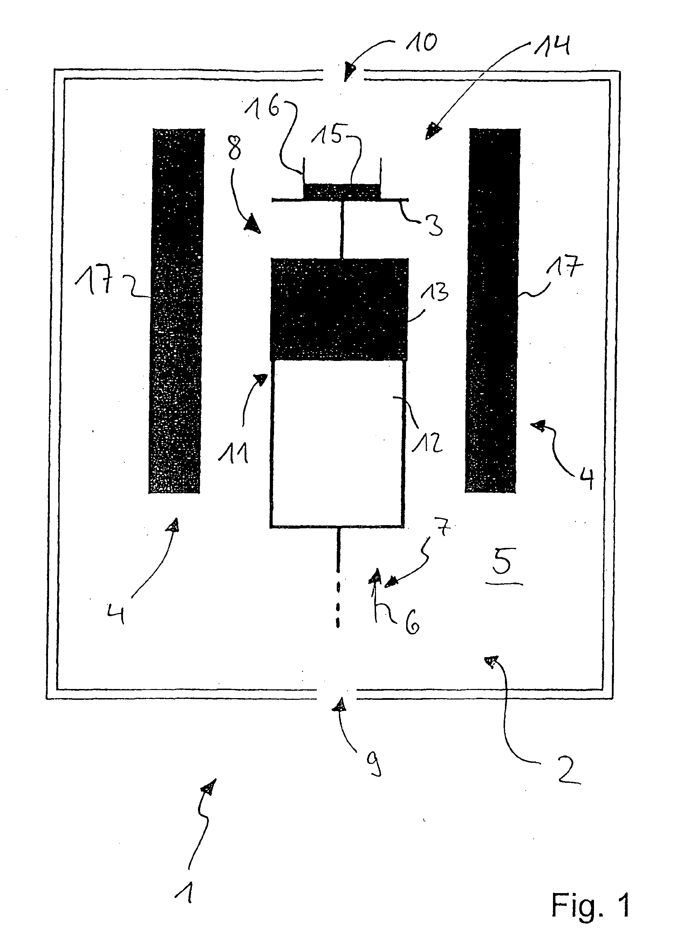

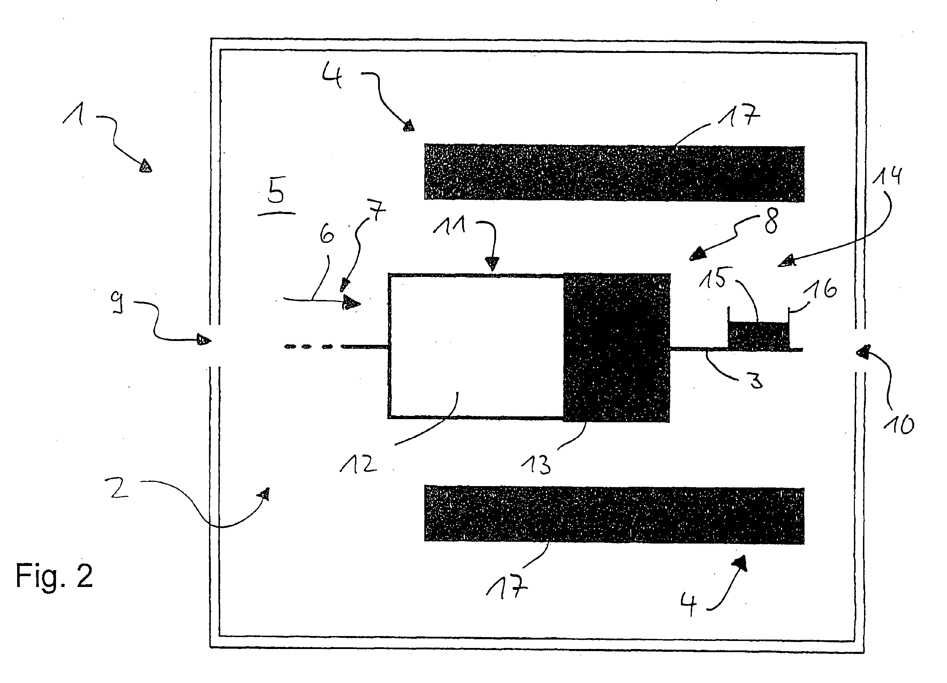

In den Fig. 1 und 2 sind schematisch ein erstes bzw. ein zweites Ausführungsbeispiel einer Thermoanalysevorrichtung 1 gezeigt.

Diese Thermoanalysevorrichtung 1 enthält einen Probenraum 2, in dem ein Probenträger 3 und Heizeinrichtungen 4 sowie ein Inertgas 5 enthalten sind. Weiter sind Strömungseinrichtungen 6 für das Inertgas 5 zur Erzeugung einer Inertgasströmung 7 zu dem Probenträger 3 hin und Sauerstofffalleneinrichtungen 8 zur Entfernung von Restsauerstoff aus dem Inertgas 5 enthalten. Die Strömungseinrichtungen 6 enthalten eine Inertgaszufuhr 9 zu dem Probenraum 2, der ferner auch einen Inertgasauslass 10 aufweist, so dass das Inertgas 5 von der Inertgaszufuhr 9 zu dem Inertgasauslass 10 durch den Probenraum 2 und darin wiederum von den Sauerstofffalleneinrichtungen 8 zu dem Probenträger 3 strömt.

Bei dem Inertgas 5 handelt es sich z.B. um Argon, insbesondere der Reinheit 99,996, wobei aber auch Gase, wie beispielsweise Stickstoff oder Helium oder Gasgemische zum Einsatz kommen können.

Die Sauerstofffalleneinrichtungen 8 enthalten Getter-Einrichtungen 11 zur Entfernung von Restsauerstoff aus dem Inertgas 5 und sind in der Inertgasströmung 7 in Strömungsrichtung vor dem Probenträger 3 in dessen Nähe, aber davon beabstandet angeordnet. Aufbau, Funktion und Wirkung von Getter-Einrichtungen sind aus dem Stand der Technik, wie insbesondere aus den eingangs angegebenen Publikationen grundsätzlich bekannt.

Die Getter-Einrichtungen 11 enthalten einen Getter-Träger 12 und ein daran oder darauf angeordnetes Getter-Material 13, das insbesondere Metalle enthält. Der Getter-Träger 12 und/oder das vorzugsweise metallische Getter-Material 13 sind/ist in der Strömungsrichtung des Inertgases 5 oder der Inertgasströmung 7 dem Probenträger 3 vorgeschaltet und zumindest annähernd axial mit letzterem ausgerichtet angeordnet. Die Heizeinrichtungen 4 sind ausgelegt, wie insbesondere ausgebildet, geformt und/oder angeordnet, um das Getter-Material 13 auf eine hinreichend hohe Temperatur (etwa oberhalb 400 °C) zu heizen. Dieser Temperaturwert stellt aber nur eine Angabe im Rahmen des Ausführungsbeispiels dar; verwendbare Getter-Einrichtungen 11 und Getter-Materialien 13 sind im Rahmen der vorliegenden Erfindung nicht auf solche beschränkt, die erst ab Temperaturen von 400 °C und mehr arbeiten oder wirken, sondern es können auch solche Getter-Einrichtungen 11 und Getter-Materialien 13 zum Einsatz kommen, die unterhalb von 400 °C arbeiten oder wirken. Das Getter-Material 13 ist temperaturbeständig und enthält Zirkonium. Der Getter-Träger 12 besteht aus einem keramischen Material, insbesondere Y₂O₃, und das Material, aus dem der Getter-Träger 12 besteht, reagiert nicht mit dem Getter-Material 13. Hinsichtlich der Gestaltung kann der Getter-Träger 12 ein Stab, ein Draht oder ein Ring sein.

Die Heizeinrichtungen 4 bestimmen eine Heizzone 14, in der der Probenträger 3 samt einer darauf (siehe Fig. 1) oder daran (siehe Fig. 2) angeordneten Probe 15 in einem Tiegel 16 und die Getter-Einrichtungen 11 oder allgemein die Sauerstofffalleneinrichtungen 8 angeordnet sind. Die Getter-Einrichtungen 11 der Sauerstofffalleneinrichtungen 8 sind deshalb in Strömungsrichtung des Inertgases 5 oder der Inertgasströmung 7 von dem Probenträger 3 beabstandet angeordnet, um Reaktionen zwischen der Probe 15 und dem Getter-Material 13 zu vermeiden.

Weiterhin sind die Heizeinrichtungen 4 derart ausgelegt und angeordnet, dass sie gleichzeitig die auf dem Probenträger 3 anordenbare Probe 15 und die Getter-Einrichtungen 11 oder zumindest deren insbesondere metallisches Getter-Material 13 heizen. Dazu enthalten die Heizeinrichtungen 4 bezüglich der Probe 15 auf oder an dem Probenträger 3 seitlich von letzterem beabstandete Heizelemente 17, die so geformt und angeordnet sind, dass sie den Probenträger 3 seitlich zumindest teilweise umgeben.

Bei dem ersten Ausführungsbeispiel gemäß der Fig. 1 ist die Thermoanalysevorrichtung 1 derart angeordnet und gestaltet, dass die Strömungseinrichtungen 6 durch Anordnung von Inertgaszufuhr 9 und Inertgasauslass 10 eine vertikale Inertgasströmung 7 von unten nach oben erzeugen, wobei dann eben der Probenträger 3 oberhalb der Getter-Einrichtungen 11 angeordnet ist, so dass die Inertgasströmung 7 an dem Probenträger 3 sowie an der auf dem Probenträger 3 angeordneten Probe 15 seitlich vorbei strömt.

Im Unterschied dazu, und dies ist der einzige Unterschied zwischen dem ersten und dem zweiten Ausführungsbeispiel, ist eben bei der Thermoanalysevorrichtung 1 gemäß dem in der Fig. 2 dargestellten zweiten Ausführungsbeispiel vorgesehen, dass die Strömungseinrichtungen 6 durch Anordnung von Inertgaszufuhr 9 und Inertgasauslass 10 ausgelegt und angeordnet sind, um eine horizontale Inertgasströmung 7 zu erzeugen, und dass der Probenträger 3 seitlich der Getter-Einrichtungen 11 angeordnet ist, so dass die Inertgasströmung 7 zumindest über den Probenträger sowie eine auf dem Probenträger anordenbare Probe strömt.

Verfahrensmäßig wird also in dem Probenraum 2, der den Probenträger 3 und die Heizeinrichtungen 4 enthält, die entsprechend von Inertgas 5 umgeben sind, das Inertgas 5 veranlasst, als Inertgasströmung 7 in dem Probenraum 2 zuerst über oder vorbei an den Getter-Einrichtungen 11 zur Entfernung von Restsauerstoff aus dem Inertgas 5 und dann zu dem Probenträger 3 zu strömen, der zwar beabstandet von den, aber in der Nähe der Getter-Einrichtungen 11 angeordnet ist.

Von hoher Bedeutung ist in den Fig. 1 und 2 die Flussrichtung des Inertgases, d.h. die Inertgasströmung 7, durch die Restsauerstoff in dem Inertgas 5 zuerst zum Metalle enthaltenden Getter-Material 13 gelangt, von diesem aufgenommen wird und dadurch nicht an den Ort der Probe 15 gelangt. Die Wahl der vertikalen oder horizontalen Anordnung kann durch weitere Anforderungen an die Apparatur und/oder die Messungen getroffen werden.

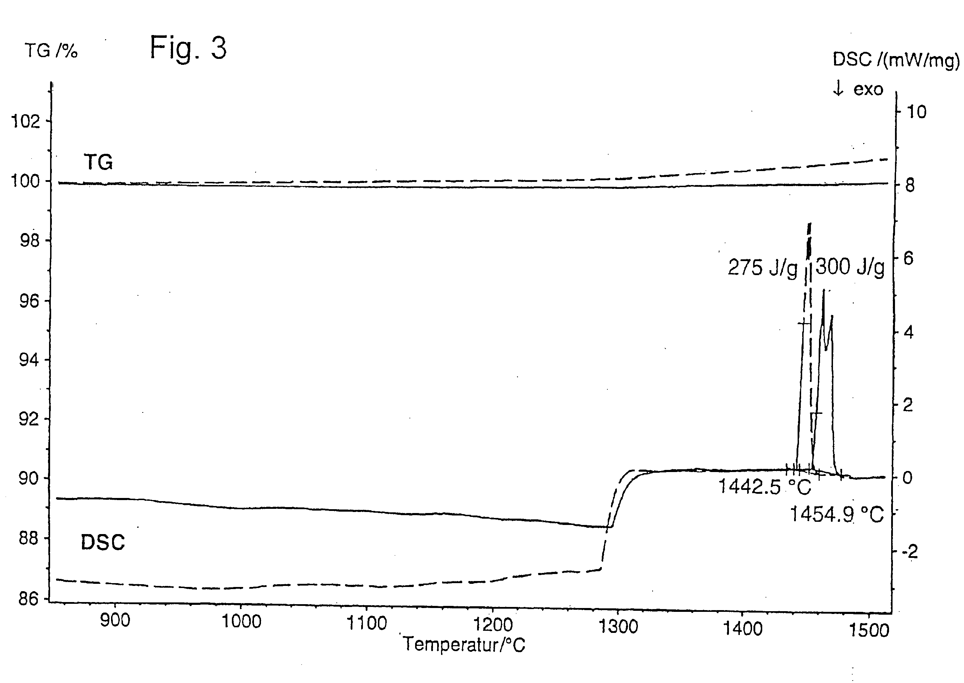

Die Wirkungsweise der Thermoanalysevorrichtung 1 und des damit durchgeführten Thermoanalyseverfahrens sowie insbesondere der erfindungsgemäß in der Inertgasströmung 7 vor der Probe 15 und deren Probenhalter 3 angeordneten Sauerstofffalleneinrichtungen 8 oder Getter-Einrichtungen 11 wird exemplarisch anhand der in der Fig. 3 gezeigten, an Nickel gewonnenen, TG-DSC-Messkurven deutlich. Es wurden zwei Nickelproben gemessen, und zwar eine Nickelprobe mit der Thermoanalysevorrichtung 1 und dem damit durchgeführten Thermoanalyseverfahren sowie insbesondere den erfindungsgemäß in der Inertgasströmung 7 vor der Probe 15 und deren Probenhalter 3 angeordneten Sauerstofffalleneinrichtungen 8 oder Getter-Einrichtungen 11 mit dem durch die durchgezogene Linie dargestellten Ergebnis, und eine Nickelprobe ohne die in der Inertgasströmung 7 vor der Probe 15 und deren Probenhalter 3 angeordneten Sauerstofffalleneinrichtungen 8 oder Getter-Einrichtungen 11.

TG bezeichnet Thermogravimentrie, also die Bestimmung von Massenänderungen, und DSC bezeichnet Differencial Scanning Calorimetry, wobei kalorische Effekte, wie z.B. Schmelzen, untersucht werden können. Beide Messungen wurden mit Argon-Spülgas der Reinheit 99,996 durchgeführt. Der aus der Literatur bekannte Schmelzpunkt (Tₘₑₗₜ) des Nickels von 1455 °C dient in Thermoanalyse-Geräten häufig zur Thermometrie bei hohen Temperaturen. Allerdings ist Nickel sehr oxidationsempfindlich, wodurch sich der Schmelzpunkt auf undefinierte Weise erniedrigt und somit nicht mehr zur Thermometrie herangezogen werden sollte.

Die Messung mit der Thermoanalysevorrichtung 1 und dem damit durchgeführten Thermoanalyseverfahren sowie insbesondere den erfindungsgemäß in der Inertgasströmung 7 vor der Probe 15 und deren Probenhalter 3 angeordneten Sauerstofffalleneinrichtungen 8 oder Getter-Einrichtungen 11 liefert diesbezüglich korrekte Resultate, wie die mit einer durchgezogenen Linie dargestellte Messkurve zeigt: Die Probe 15 oxidiert nicht merklich, was an der horizontal verlaufenden TG-Kurve zu erkennen ist; es erfolgt keine Gewichtsänderung. Der so genannte DSC-Schmelzpeak des Nickels findet bei 1454,9 °C, also annähernd dem Literaturwert von 1455 °C statt, die detektierte Schmelzenthalpie delta H beträgt 299,8 J/g, also ungefähr 300,0 J/g.

Während der Messung ohne die erfindungsgemäß in der Inertgasströmung 7 vor der Probe 15 und deren Probenhalter 3 angeordneten Sauerstofffalleneinrichtungen 8 oder Getter-Einrichtungen 11 oxidiert die Probe 15, was an der deutlich ansteigenden TG-Kurve gemäß der gestrichelt dargestellten Messkurve zu erkennen ist (Gewichtszunahme). Der DSC-Schmelzpeak liegt aufgrund der Oxidation bereits bei 1443 °C, also 12 °C unterhalb des Literaturwertes. Auch die gemessene Schmelzenthalpie von 275 J/g fällt geringer aus als der Literaturwert von 300 J/g.

Die Thermoanalysevorrichtung 1 und das damit durchgeführten Thermoanalyseverfahren sowie insbesondere die erfindungsgemäß in der Inertgasströmung 7 vor der Probe 15 und deren Probenhalter 3 angeordneten Sauerstofffalleneinrichtungen 8 oder Getter-Einrichtungen 11 ermöglichen eine in situ Reduzierung der Restsauerstoffkonzentration bei Thermoanalysemessungen (TGA, DSC, STA, DIL etc.), und sind derart gestaltet, dass ein insbesondere temperaturbeständiges Getter-Material 13 in den Mess- oder Probenraum 2 der Thermoanalysevorrichtung 1 eingebracht ist. In jeweils erforderlicher Weise wird das Getter-Material 13 durch die Heizelemente 17 auf eine hinreichend hohe Temperatur gebracht, um wirken zu können. Der Restsauerstoff in dem Inertgas 5 in dem Probenraum 2 wird vom Getter-Material 13 aufgenommen, und dadurch wird eine Oxidation der Probe 15 wirksam verhindert. Dazu ist das Getter-Material 13 derart im Thermoanalyse-Gerät positioniert, dass das Inertgas 5 zuerst am Getter-Material 13 und dann an der Probe 15 vorbeiströmt. Das Getter-Material 13 hat keine Berührung zu Tiegel 16 und Probe 15. Der temperaturbeständige Getter-Träger 12 positioniert das Getter-Material 13 entsprechend im Probenraum 2 der Thermoanalysevorrichtung 1. Der Getter-Träger 12 besteht aus einem Material, wie z.B. einer Y₂O₃-Keramik, welches nicht mit dem Getter-Material 13 reagiert.

Insbesondere sind alle einzelnen Merkmale und Ausgestaltungsmöglichkeiten der Erfindung und ihrer Ausführungsbeispiele kombinierbar.

### Bezugszeichenliste

- 1: Thermoanalysevorrichtung
- 2: Probenraum
- 3: Probenträger
- 4: Heizeinrichtungen
- 5: Inertgas
- 6: Strömungseinrichtungen
- 7: Inertgasströmung
- 8: Sauerstofffalleneinrichtungen
- 9: Inertgaszufuhr
- 10: Inertgasauslass
- 11: Getter-Einrichtungen
- 12: Getter-Träger
- 13: Getter-Material
- 14: Heizzone
- 15: Probe
- 16: Tiegel
- 17: Heizelemente

## Patentansprüche

1. Thermoanalysevorrichtung (1), mit einem Probenraum (2), in dem ein Probenträger (3) und Heizeinrichtungen (4) sowie einer Strömungseinrichtungen (6) mit einer Inertgaszufuhr (9) für ein Inertgas (5) enthalten sind, **dadurch gekennzeichnet, dass** mindestens eine Getter-Einrichtung (11) zur Entfernung von Restsauerstoff aus dem Inertgas (5) enthalten ist, wobei die eine Getter-Einrichtung (11) in der Inertgasströmung (7) in Strömungsrichtung (6) vor dem Probenträger (3) in dessen Nähe angeordnet ist und die Getter-Einrichtung (11) mindestens einen Getter-Träger (12) zur Aufnahme eines Getter-Materials (13) aufweist, wobei die Getter-Einrichtung (11) und der Probenträger (3) im Proberaum (2) beabstandet voneinander positioniert sind.

2. Thermoanalysevorrichtung (1) nach Anspruch 1, **dadurch gekennzeichnet, dass** der Getter-Träger (12) und/oder das Getter-Material (13) axial zu dem Probenträger (3) angeordnet sind.

3. Thermoanalysevorrichtung (1) nach Anspruch 1 oder 2, **dadurch gekennzeichnet, dass** das Getter-Material (13) ein temperaturbeständiges metallisches und/oder Metalle enthaltendes Material, vorzugsweise Zirkonium ist.

4. Thermoanalysevorrichtung (1) nach einem der Ansprüche 1 bis 3, dadurch gekenn-zeichnet, dass der Getter-Träger (12) zumindest teilweise aus einem keramischen Material besteht, vorzugsweise aus einem keramischen Material das Y2O3 enthält.

5. Thermoanalysevorrichtung (1) nach einem der Ansprüche 1 bis 4, **dadurch gekennzeichnet, dass** der Getter-Träger (12) aus einem Material besteht, das nicht mit dem Getter-Material (13) reagiert.

6. Thermoanalysevorrichtung (1) nach einem der Ansprüche 1 bis 5, **dadurch gekennzeichnet, dass** der Getter-Träger (12) ein Stab, ein Draht oder ein Ring ist.

7. Thermoanalysevorrichtung (1) nach einem der Ansprüche 1 bis 6, **dadurch gekennzeichnet, dass** die Heizeinrichtungen (4) derart ausgelegt, ausgebildet, geformt und/oder angeordnet sind, dass das Getter-Material (13) auf eine Temperatur von 400 °C oder mehr aufheizbar ist.

8. Thermoanalysevorrichtung (1) nach einem der Ansprüche 1 bis 7, **dadurch gekennzeichnet, dass** die Heizeinrichtungen (4) eine Heizzone (14) bestimmen, in der der Probenträger (3) samt einer darauf oder daran angeordneten Probe (15) und zumindest teilweise die Getter-Einrichtungen (11) oder zumindest das Getter-Material (13), angeordnet sind.

9. Thermoanalysevorrichtung (1) nach einem Ansprüche 1 bis 8, **dadurch gekennzeichnet, dass** die Heizeinrichtungen (4) derart ausgelegt und angeordnet sind, dass mit den Heizeinrichtungen (4) gleichzeitig eine auf dem Probenträger (3) vorhandene Probe (15) und zumindest teilweise die Getter-Einrichtungen (11), ggf. zumindest das Getter-Material (13), beheizbar ist.

10. Thermoanalysevorrichtung (1) nach einem der Ansprüche 8 oder 9, dadurch gekenn-zeichnet, dass die Heizeinrichtungen (4) zum Heizen einer auf dem Probenträger (3) vorhandenen Probe (15) mit wenigstens einem seitlich von der Probe (15) beabstandetem Heizelement (17) ausgestattet ist.

11. Thermoanalysevorrichtung (1) nach einem der Ansprüche 8 oder 9, dadurch gekenn-zeichnet, dass das Heizelement (17) oder die Heizelemente (17) den Probenträger (3) seitlich zumindest teilweise umgibt bzw. umgeben.

12. Thermoanalysevorrichtung (1) nach einem der Ansprüche 1 bis 11, dadurch gekenn-zeichnet, dass die Getter-Einrichtung (11) über eine separate Heizeinrichtung (4) verfügt, mit der die Getter-Einrichtung (11) separat beheizbar und/oder bei einer bestimmten Temperatur haltbar ist.

13. Thermoanalysevorrichtung (1) nach einem der vorhergehenden Ansprüche, **dadurch gekennzeichnet, dass** die Strömungseinrichtungen (6) derart gestaltet ist, dass eine im Wesentlichen vertikale und/oder horizontale Inertgasströmung (7) erzeugt wird, und dass der Probenträger (3) oberhalb der Getter-Einrichtungen (11) und/oder seitlich der Getter-Einrichtungen (11) angeordnet ist, so dass die Inertgasströmung (7) an dem Probenträger (3) sowie an einer auf dem Probenträger (3) anordenbaren Probe (15) seitlich und/oder oberhalb vorbei strömt.

14. Thermoanalysevorrichtung (1) nach einem der vorhergehenden Ansprüche, **dadurch gekennzeichnet, dass** das Inertgas (5) Argon und/oder Stickstoff und/oder Helium, insbesondere der Reinheit 99,996 enthält.

15. Thermoanalysevorrichtung (1) nach einem der vorhergehenden Ansprüche, **dadurch gekennzeichnet, dass** der Probenträger (3) ausgelegt ist, einen Tiegel (16) zur Aufnahme einer zu untersuchenden Probe (15) zu tragen.

16. Thermoanalysevorrichtung (1) nach einem der vorhergehenden Ansprüche, **dadurch gekennzeichnet, dass** die Thermoanalysevorrichtung (1) lediglich durch die Verwendung der Inertgasströmung (7) betreibbar ist, ohne das die Thermoanalysevorrichtung (1) vorher mit einem Vakuum versehen worden ist.

17. Thermoanalyseverfahren, wobei in einem Probenraum (2) ein Probenträger (3) und Heizeinrichtungen (4) von Inertgas (5) umgeben sind, wobei eine Inertgasströmung (7) durch eine Inertgaszufuhr (9) in dem Probenraum (2) erzeugt wird, **dadurch gekennzeichnet, dass**
- die Inertgasströmung (7) in dem Probenraum (2) zuerst über oder vorbei an der Getter-Einrichtungen (11) zur Entfernung von Restsauerstoff aus dem Inertgas (5) und dann zu dem Probenträger (3) strömt,
- die Getter-Einrichtungen (11) in der Nähe des Probenträgers angeordnet wird,
- mindestens ein Getter-Träger (12) zur Aufnahme eines Getter-Materials (13) in der Getter-Einrichtung (11) angeordnet wird, wobei die Getter-Einrichtung (11) und der Probenträger (3) im Proberaum (2) beabstandet voneinander positioniert werden.

18. Thermoanalyseverfahren nach Anspruch 17, **dadurch gekennzeichnet, dass** der Getter-Träger (12) und/oder das Getter-Material (13) axial zu dem Probenträger (3) ausgerichtet werden.

19. Thermoanalyseverfahren nach Anspruch 17 oder 18, **dadurch gekennzeichnet, dass** der Getter-Träger (12) aus einem keramischen Material hergestellt ist.

20. Thermoanalyseverfahren nach einem der Ansprüche 17 bis 19, **dadurch gekennzeichnet, dass** die Heizeinrichtung/en (4) eine Heizzone (14) bestimmt/bestimmen, in der der Probenträger (3) samt einer darauf und/oder daran angeordneten Probe (15) und die Getter-Einrichtungen (11), und/oder das Getter-Material (13), derart angeordnet werden, dass durch die Heizeinrichtungen (4) gleichzeitig eine auf dem Probenträger (3) angeordnete Probe (15) und/oder die Getter-Einrichtungen (11) und/oder ein in diesen enthaltenes Getter-Material (13) beheizt werden.

21. Thermoanalyseverfahren nach einem der Ansprüche 17 bis 20, **dadurch gekennzeichnet, dass** eine vertikale und/oder eine horizontale Inertgasströmung (7) erzeugt wird, die zuerst an den Getter-Einrichtungen (11) vorbei und dann zu dem darüber und/oder seitlich angeordneten Probenträger (3) strömt, so dass die Inertgasströmung (7) an dem Probenträger (3) sowie an einer auf dem Probenträger (3) angeordneten Probe (15) seitlich vorbei und/oder darüber geleitet wird.

22. Thermoanalyseverfahren nach einem der Ansprüche 17 bis 21, **dadurch gekennzeichnet, dass** die Heizeinrichtungen (4) derart angeordnet werden, dass mit einer Heizeinrichtung (4) die Getter-Einrichtung (11) und mit einer weiteren Heizeinrichtung (4) der Probenträger (3) mit der Probe (15) beheizt wird.

23. Thermoanalyseverfahren nach einem der Ansprüche 17 bis 22, **dadurch gekennzeichnet, dass** die Thermoanalysevorrichtung (1) nur durch das Spülen mit einer Inertgasströmung (7) betrieben wird, ohne das die Thermoanalysevorrichtung (1) vorher evakuiert wird.

## Claims

1. A thermal analysis apparatus (1), with a sample space (2), in which a sample carrier (3) and heating devices (4) as well as flow devices (6) with an inert gas supply (9) for an inert gas (5) are contained, **characterised in that** at least one getter device (11) for the removal of residual oxygen from the inert gas (5) is contained, wherein the one getter device (11) is disposed in the inert gas flow (7) in the flow direction (6) upstream of the sample carrier (3) in the vicinity thereof and the getter device (11) comprises at least one getter carrier (12) for receiving a getter material (13), wherein the getter device (11) and the sample carrier (3) are positioned spaced apart from one another in the sample space (2).

2. The thermal analysis apparatus (1) according to claim 1, **characterised in that** the getter carrier (12) and/or the getter material (13) are disposed axially with respect to the sample carrier (3).

3. The thermal analysis apparatus (1) according to claim 1 or 2, **characterised in that** the getter material (13) is a temperature-resistant metallic material and/or a temperature-resistant material containing metals, preferably zirconium.

4. The thermal analysis apparatus (1) according to any one of claims 1 to 3, **characterised in that** the getter carrier (12) is made at least partially from a ceramic material, preferably from a ceramic material containing Y₂O₃.

5. The thermal analysis apparatus (1) according to any one of claims 1 to 4, **characterised in that** the getter carrier (12) is made from a material which does not react with the getter material (13).

6. The thermal analysis apparatus (1) according to any one of claims 1 to 5, **characterised in that** the getter carrier (12) is a rod, a wire or a ring.

7. The thermal analysis apparatus (1) according to any one of claims 1 to 6, **characterised in that** the heating devices (4) are designed, constituted, formed and/or disposed in such a way that the getter material (13) can be heated to a temperature of 400°C or over.

8. The thermal analysis apparatus (1) according to any one of claims 1 to 7, **characterised in that** the heating devices (4) define a heating zone (14), in which the sample carrier (3) together with a sample (15) placed thereon or therein and at least in part the getter devices (11) or at least the getter material (13) are disposed.

9. The thermal analysis apparatus (1) according to any one of claims 1 to 8, **characterised in that** the heating devices (4) are designed and disposed in such a way that a sample (15) present on the sample carrier (3) and at least in part the getter devices (11), if appropriate at least the getter material (13), can be heated simultaneously with the heating devices (4).

10. The thermal analysis apparatus (1) according to any one of claims 8 or 9, **characterised in that** the heating devices (4) for heating a sample (15) present on the sample carrier (3) are provided with at least one heating element (17) laterally spaced apart from the sample (15).

11. The thermal analysis apparatus (1) according to any one of claims 8 or 9, **characterised in that** the heating element (17) or the heating elements (17) surrounds or surround the sample carrier (3) laterally at least in part.

12. The thermal analysis apparatus (1) according to any one of claims 1 to 11, **characterised in that** the getter device (11) comprises a separate heating device (4), with which the getter device (11) can be heated separately and/or can be held at a specific temperature.

13. The thermal analysis apparatus (1) according to any one of the preceding claims, **characterised in that** the flow devices (6) are designed such that an essentially vertical and/or horizontal inert gas flow (7) is generated, and that the sample carrier (3) is disposed above the getter devices (11) and/or laterally with respect to the getter devices (11), so that the inert gas flow (7) flows past laterally and/or above the sample carrier (3) and a sample (15) that can be placed on the sample carrier (3).

14. The thermal analysis apparatus (1) according to any one of the preceding claims, **characterised in that** the inert gas (5) comprises argon and/or nitrogen and/or helium, in particular of purity 99.996.

15. The thermal analysis apparatus (1) according to any one of the preceding claims, **characterised in that** the sample carrier (3) is designed to carry a crucible (16) for receiving a sample (15) to be investigated.

16. The thermal analysis apparatus (1) according to any one of the preceding claims, **characterised in that** the thermal analysis apparatus (1) can be operated solely with the use of the inert gas flow (7) without the thermal analysis apparatus (1) previously having been provided with a vacuum.

17. A thermal analysis method, wherein a sample carrier (3) and heating devices (4) are surrounded by inert gas (5) in a sample space (2), wherein an inert gas flow (7) is generated by an inert gas supply (9) in the sample space (2), **characterised in that**
- the inert gas flow (7) in the sample space (2) first flows over or past the getter devices (11) for the removal of residual oxygen from the inert gas (5) and then to the sample carrier (3),
- the getter devices (11) are disposed in the vicinity of the sample carrier,
- at least one getter carrier (12) for receiving a getter material (13) is disposed in the getter device (11), wherein the getter device (11) and the sample carrier (3) are positioned spaced apart from one another in the process space (2).

18. A thermal analysis method according to claim 17, **characterised in that** the getter carrier (12) and/or the getter material (13) are orientated axially with respect to the sample carrier (3).

19. The thermal analysis method according to claim 17 or 18, **characterised in that** the getter carrier (12) is produced from a ceramic material.

20. The thermal analysis method according to any one of claims 17 to 19, **characterised in that** the heating device(s) (4) define(s) a heating zone (14), in which the sample carrier (3) together with a sample (15) placed thereon and/or therein and the getter devices (11), and/or the getter material (13), are disposed in such a way that a sample (15) placed on the sample carrier (3) and/or the getter devices (11) and/or a getter material (13) contained in the latter are heated simultaneously by the heating devices (4).

21. The thermal analysis method according to any one of claims 17 to 20, **characterised in that** a vertical and/or a horizontal inert gas flow (7) is generated, which first flows past the getter devices (11) and then to the sample carrier (3) disposed above and/or laterally with respect to the latter, so that the inert gas flow (7) is conveyed laterally past and/or over the sample carrier (3) and a sample (15) placed on the sample carrier (3).

22. The thermal analysis method according to any one of claims 17 to 21, **characterised in that** the heating devices (4) are disposed in such a way that the getter device (11) is heated by one heating device (4) and the sample carrier (3) with the sample (15) is heated by another heating device (4).

23. The thermal analysis method according to any one of claims 17 to 22, **characterised in that** the thermal analysis apparatus (1) is operated solely by purging with an inert gas flow (7) without the thermal analysis apparatus (1) previously having been evacuated.

## Revendications

1. Dispositif de thermoanalyse (1), comprenant un espace d'échantillon (2) dans lequel un support d'échantillon (3) et des dispositifs de chauffage (4) ainsi que des dispositifs d'écoulement (6) avec une arrivée de gaz inerte (9) pour un gaz inerte (5) sont prévus, **caractérisé en ce qu'**au moins un dispositif getter (11) pour éliminer l'oxygène restant du gaz inerte (5) est contenu, sachant que le dispositif getter (11) est disposé dans l'écoulement de gaz inerte (7) dans le sens d'écoulement (6) avant le support d'échantillon (3) et à proximité de celui-ci, et le dispositif getter (11) présente au moins un support getter (12) pour recevoir un matériau getter (13), sachant que le dispositif getter (11) et le support d'échantillon (3) sont positionnés à distance l'un de l'autre dans l'espace d'échantillon (2).

2. Dispositif de thermoanalyse (1) selon la revendication 1, **caractérisé en ce que** le support getter (12) et/ou le matériau getter (13) sont disposés axialement au support d'échantillon (3).

3. Dispositif de thermoanalyse (1) selon la revendication 1 ou 2, **caractérisé en ce que** le matériau getter (13) est un matériau résistant à la température, métallique et/ou contenant des métaux, de préférence du zirconium.

4. Dispositif de thermoanalyse (1) selon l'une des revendications là 3, **caractérisé en ce que** le support getter (12) est composé au moins partiellement d'un matériau céramique, de préférence d'un matériau céramique qui contient du Y₂O₃.

5. Dispositif de thermoanalyse (1) selon l'une des revendications là 4, **caractérisé en ce que** le support getter (12) est composé d'un matériau qui ne réagit pas avec le matériau getter (13).

6. Dispositif de thermoanalyse (1) selon l'une des revendications là 5, **caractérisé en ce que** le support getter (12) est une tige, un fil ou une bague.

7. Dispositif de thermoanalyse (1) selon l'une des revendications là 6, **caractérisé en ce que** les dispositifs de chauffage (4) sont conçus, formés et/ou disposés de façon à ce que le matériau getter (13) puisse être chauffé à une température de 400°C ou plus.

8. Dispositif de thermoanalyse (1) selon l'une des revendications là 7, **caractérisé en ce que** les dispositifs de chauffage (4) déterminent une zone de chauffage (14) dans laquelle sont disposés le support d'échantillon (3) et la totalité de l'échantillon (15) disposé dessus ou contre, et au moins partiellement les dispositifs getter (11) ou au moins le matériau getter (13).

9. Dispositif de thermoanalyse (1) selon l'une des revendications là 8, **caractérisé en ce que** les dispositifs de chauffage (4) sont ainsi conçus et disposés que, simultanément, un échantillon (15) présent sur le support d'échantillon (3) et au moins partiellement les dispositifs getter (11), et le cas échéant au moins le matériau getter (13), peuvent être chauffés avec les dispositifs de chauffage (4).

10. Dispositif de thermoanalyse (1) selon l'une des revendications 8 ou 9, **caractérisé en ce que** les dispositifs de chauffage (4) pour chauffer un échantillon (15) présent sur le support d'échantillon (3) sont dotés d'au moins un élément de chauffage (17) distant latéralement de l'échantillon (15).

11. Dispositif de thermoanalyse (1) selon l'une des revendications 8 ou 9, **caractérisé en ce que** l'élément/les éléments de chauffage (17) entoure(nt) au moins partiellement les côtés du support d'échantillon (13).

12. Dispositif de thermoanalyse (1) selon l'une des revendications 1 à 11, **caractérisé en ce que** le dispositif getter (11) dispose d'un dispositif de chauffage (4) séparé, avec lequel le dispositif getter (11) peut être chauffé séparément et/ou maintenu à une température déterminée.

13. Dispositif de thermoanalyse (1) selon l'une des revendications précédentes, **caractérisé en ce que** les dispositifs d'écoulement (6) sont ainsi conçus qu'un écoulement de gaz inerte (7) essentiellement vertical et/ou horizontal est produit, et que le support d'échantillon (3) est disposé au-dessus des dispositifs getter (11) et/ou sur le côté des dispositifs getter (11), de sorte que l'écoulement de gaz inerte (7) s'écoule sur les côtés et/ou au-dessus du support d'échantillon (3) ainsi que d'un échantillon (15) pouvant être disposé sur le support d'échantillon (3).

14. Dispositif de thermoanalyse (1) selon l'une des revendications précédentes, **caractérisé en ce que** le gaz inerte (5) contient de l'argon et/ou de l'azote et/ou de l'hélium, en particulier de pureté 99,996.

15. Dispositif de thermoanalyse (1) selon l'une des revendications précédentes, **caractérisé en ce que** le support d'échantillon (3) est conçu pour supporter un creuset (16) pour recevoir un échantillon (15) à analyser.

16. Dispositif de thermoanalyse (1) selon l'une des revendications précédentes, **caractérisé en ce que** le dispositif de thermoanalyse (1) peut fonctionner uniquement en employant l'écoulement de gaz inerte (7), sans que le dispositif de thermoanalyse (1) n'est été doté d'un vide au préalable.

17. Procédé de thermoanalyse, dans lequel un support d'échantillon (3) et des dispositifs de chauffage (4) sont entourés par du gaz inerte (5) dans un espace d'échantillon (2), sachant qu'un écoulement de gaz inerte (7) est produit par une arrivée de gaz inerte (9) dans l'espace d'échantillon (2), **caractérisé en ce que**
- l'écoulement de gaz inerte (7) dans l'espace d'échantillon (2) s'écoule d'abord au-dessus des, ou devant les dispositifs getter (11) pour éliminer l'oxygène restant du gaz inerte (5), puis vers le support d'échantillon (3),
- les dispositifs getter (11) sont disposés à proximité du support d'échantillon,
- au moins un support getter (12) pour recevoir un matériau getter (13) est disposé dans le dispositif getter (11), sachant que le dispositif getter (11) et le support d'échantillon (3) sont positionnés à distance l'un de l'autre dans l'espace d'échantillon (2).

18. Procédé de thermoanalyse selon la revendication 17, **caractérisé en ce que** le support getter (12) et/ou le matériau getter (13) est/sont aligné(s) axialement par rapport au support d'échantillon (3).

19. Procédé de thermoanalyse selon la revendication 17 ou 18, **caractérisé en ce que** le support getter (12) est fabriqué dans un matériau céramique.

20. Procédé de thermoanalyse selon l'une des revendications 17 à 19, **caractérisé en ce que** le (s) dispositif(s) de chauffage (4) détermine(nt) une zone de chauffage (14) dans laquelle le support d'échantillon (3) et la totalité de l'échantillon (15) disposé dessus ou contre, et les dispositifs getter (11) et/ou le matériau getter (13) sont ainsi disposés que simultanément un échantillon (15) disposé sur le support d'échantillon (3) et/ou les dispositifs getter (11), et/ou un matériau getter (13) contenu dans ceux-ci, sont chauffés par les dispositifs de chauffage (4).

21. Procédé de thermoanalyse selon l'une des revendications 17 à 20, **caractérisé en ce qu'**un écoulement de gaz inerte (7) vertical et/ou horizontal est produit, qui s'écoule d'abord devant les dispositifs getter (11) puis vers le support d'échantillon (3) disposé dessus et/ou sur les côtés, de sorte que l'écoulement de gaz inerte (7) est dérivé sur les côtés et/ou au-dessus du support d'échantillon (3) ainsi que d'un échantillon (15) disposé sur le support d'échantillon (3).

22. Procédé de thermoanalyse selon l'une des revendications 17 à 21, **caractérisé en ce que** les dispositifs de chauffage (4) sont ainsi disposés que le dispositif getter (11) est chauffé avec un dispositif de chauffage (4) et le support d'échantillon (3) avec l'échantillon (15) est chauffé avec un autre dispositif de chauffage (4).

23. Procédé de thermoanalyse selon l'une des revendications 17 à 22, **caractérisé en ce que** le dispositif de thermoanalyse (1) n'est utilisé que par le rinçage avec un écoulement de gaz inerte (7), sans que le dispositif de thermoanalyse (1) ne soit vidé au préalable.
